# EUROPEAN PATENT APPLICATION

(11) **EP 4 467 305 A1**
(43) Date of publication of application: **27.11.2024**
(21) Application number: 23796228.7
(22) Date of filing: 20.04.2023
(51) Int. Cl.: B27N 3/00, B27N 3/02, B32B 21/02, E04C 2/16

(54) **WOODEN BOARD**

(30) Priority: 28.04.2022 JP 2022074054; 28.04.2022 JP 2022074055
(71) Applicant: Daiken Corporation, Nanto-City Toyama 932-0298 (JP)
(72) Inventor: FUKAYA, Tsuyoshi, Nanto-city, Toyama 932-0298 (JP); OSHIMA, Katsuhito, Nanto-city, Toyama 932-0298 (JP); YASUI, Shinpei, Nanto-city, Toyama 932-0298 (JP)
(74) Representative: Germain Maureau
(86) International application number: PCT/JP2023/015735
(87) International publication number: WO 2023/210486

(57) **Abstract**

A wooden board (As) is obtained by laminating, adhering, and integrating, in an aggregated state, a large number of small thin wood pieces (1, 1, . . . ) with top and bottom surfaces extending along the fibers. For the small thin wood pieces (1), at least two of the following are specified: a thickness (t) ranging from 0.05 mm to 0.35 mm between the top and bottom surfaces; an aspect ratio (d1/d2) ranging from 4 to 80 where the aspect ratio is defined by (a first length (d1) along the fibers)/(a second length (d2) in the direction orthogonal to the fibers); and the top and bottom surfaces with an area of 6 cm² or less. Alternatively, the following are specified: a bulk density ranging from 10 kg/m³ to 150 kg/m³, and the top and bottom surfaces with an area of 6 cm² or less.

## Description

### TECHNICAL FIELD

The present invention relates to a wooden board.

### BACKGROUND ART

In general, tropical plywood, such as lauan plywood, is well known as existing wooden boards and widely used. In recent years, however, the tropical plywood itself has become less easily available due to depletion of raw materials and for reduction in the environmental destruction and is thus to be replaced with other types of wooden boards.

Plywood made of domestic conifer as a raw material has no problem of depletion but insufficient surface properties and is thus used only for a purpose requiring the strength.

OSBs, particle boards (PBs), and MDFs also have no problem in the availability of raw materials. With a high strength, OSBs have the problem of insufficient surface properties. PBs are inexpensive but have the problem of insufficient strength and dimensional stability. MDFs have good surface properties but insufficient dimensional stability. In addition, OSBs, PBs, and MDFs have higher densities than tropical plywood.

In this manner, at present, there is no wooden board satisfying multiple factors, such as the strength, the weight, the surface properties, and dimensional stability in addition to the stability of the raw material.

Patent Documents 1 to 4 suggest typical examples of such types of wooden boards. The wooden boards disclosed in Patent Documents 1 and 2 each includes a core layer, and a surface layer on at least one surface of the core layer. The core and surface layers are each obtained by laminating a large number of thin wood pieces. Patent Document 1 suggests using, in the wooden board, thin wood pieces with a thickness ranging from 0.50 mm to 1.50 mm in an absolute value for the core layer, and the thin wood pieces with a thickness ranging from 0.08 mm to 0.60 mm in an absolute value for the surface layer.

On the other hand, in the technique disclosed in Patent Document 3, a fiber sheet is pressure-bonded onto the surface of plywood, OSB, or laminated wood, for example, and is compressed into a high-density fiber layer to fill and harden the recesses on the surface of the base material.

Patent Document 4 discloses a floor decorative material obtained by laminating a moisture-proof film with a moisture permeability of 7 g/m² or less for 24 hours on the back surface of a wooden base material, such as an MDF. Even with a decorative sheet, with low moisture permeability, attached to the front surface, the floor decorative material is less warped or bent by a large dimensional change.

### CITATION LIST

### PATENT DOCUMENTS

Patent Document 1: Japanese Unexamined Patent Publication No. H7-47514
Patent Document 2: Japanese Unexamined Patent Publication No. H7-76004
Patent Document 3: Japanese Unexamined Patent Publication No. 2019-31104
Patent Document 4: Japanese Unexamined Patent Publication No. 2019-107894

### SUMMARY OF THE DISCLOSURE

### TECHNICAL PROBLEMS

The wooden boards disclosed in Patent Documents 1 and 2 each includes the core and surface layers made of the thin wood pieces that are different from each other not only in size but also in thickness. There is thus a need to prepare the two types of thin wood pieces at the time of production, which inevitably requires time and effort for the production and management. In addition, the wooden boards made of the thin wood pieces described in the above patent documents have each an uneven surface, that is, cannot reliably exhibit surface smoothness sufficient to serve as a floor base material, for example.

The wooden board according to Patent Document 3 requires time and effort for secondary processing of the base material. In addition, since the wooden board also has the double structure of the base material and the fiber layer, there is a limit in reducing the thickness of the wooden board. The dimensional change caused by moisture absorption cannot be reduced.

The decorative material according to Patent Document 4 is a fabricated article of the base material, which requires time and effort. In addition, the width of the moisture-proof film limits the width of the applicable base material.

The present invention was made in view of the problems. It is an objective of the present invention to provide a wooden board (or a base material) obtained by laminating a large number of thin wood pieces and improved to exhibit a high strength and excellent dimensional stability and surface properties and to be easily produced.

### SOLUTION TO THE PROBLEM

In order to achieve the objective, the present invention provides a wooden board obtained as follows. In place of flakes usually used as constituent materials of OSBs, thin wood pieces only in small sizes (incl. thicknesses) are used. From these thin wood pieces, small thin wood pieces only in smaller sizes are selected as a constituent material. A large number of these small thin wood pieces are laminated in an aggregated state into a wooden board.

In the present invention, wooden layers are laminated and integrated on the top and bottom surfaces of the wooden board into a laminated wooden board including a core layer and top and bottom layers. The wooden layers are made of, as a constituent material, tiny thin wood pieces only in further smaller sizes selected from the small thin wood pieces.

In the present specification, the "flakes" are pieces cut from raw timber for an OSB and typically used as a constituent material of an OSB. The "thin wood pieces" according to the present invention are cut from raw timber like "flakes" but are thinner and smaller than the "flakes" usually out of the typical thickness range of the "flakes." The "small thin wood pieces" according to the present invention fall within the same thickness range as the "thin wood pieces" but are smaller than the "thin wood pieces."

Specifically, a first aspect of the present invention is directed to a wooden board obtained by laminating, adhering, and integrating, in an aggregated state (aggregated condition, aggregated manner), a large number of small thin wood pieces with top and bottom (front and back) surfaces extending along fibers. The small thin wood pieces forming this wooden board have each a thickness ranging from 0.05 mm to 0.35 mm between the top and bottom surfaces, and an aspect ratio ranging from 4 to 80 where the aspect ratio is defined by (a first length along the fibers as a first direction)/(a second length in a direction orthogonal to the fibers as a second direction).

In the first aspect of the invention, the wooden board is obtained by laminating, adhering, and integrating, in the aggregated state, the large number of small thin wood pieces with the thickness ranging from 0.05 mm to 0.35 mm and the aspect ratio ranging from 4 to 80.

The thickness, the first length, and the second length of the small thin wood pieces are all expressed in mean. The sizes of a test piece are measured as follows. The sizes are measured at a plurality of points of boards under JIS A 5905:2014 (i.e., a fiber board) and JIS A 5908:2015 (i.e., a particle board) using a measuring instrument with an accuracy ranging from 1/20 mm to 1 mm and the means of the obtained values are regarded as the thickness, width, and length. Under the rule, the thickness, the first length, and the second length of the wooden board and the small thin wood pieces forming the wooden board are all expressed in mean in the present specification. The accuracy (variation) of the means of the respective dimensions of the wooden board and the small thin wood pieces corresponds, for example, to the accuracy (accuracy ranging from 1/20 mm to 1 mm) of the measuring instrument under the JIS. The accuracy (variation) also corresponds to the accuracy (accuracy of settable design values) of the machine used in the step (step P1) of producing thin wood pieces or in the step (step P2) of producing small thin wood pieces, which will be described later.

Like the first aspect, a second aspect of the present invention is directed to a wooden board obtained by laminating, adhering, and integrating, in an aggregated state, a large number of small thin wood pieces with top and bottom surfaces extending along fibers. The small thin wood pieces forming this wooden board each includes the top and bottom surfaces with an area of 6 cm² or less and having a thickness ranging from 0.05 mm to 0.35 mm between the top and bottom surfaces.

In the second aspect, the wooden board is obtained by laminating, adhering, and integrating, in the aggregated state, the large number of small thin wood pieces with the area of 6 cm² or less and the thicknesses ranging from 0.05 mm to 0.35 mm.

Like the first aspect, a third aspect of the present invention is directed to a wooden board obtained by laminating, adhering, and integrating, in an aggregated state, a large number of small thin wood pieces with top and bottom surfaces extending along fibers. The small thin wood pieces forming this wooden board each includes the top and bottom surfaces with an area of 6 cm² or less and has an aspect ratio ranging from 4 to 80 where the aspect ratio is defined by (a first length along the fibers)/(a second length in a direction orthogonal to the fibers).

In the third aspect, the wooden board is obtained by laminating, adhering, and integrating, in the aggregated state, the large number of small thin wood pieces with the area of 6 cm² or less and the aspect ratio ranging from 4 to 80.

That is, the first to third aspects each specifies any two of the thickness (0.05 mm to 0.35 mm), the aspect ratio (4 to 80), and the area (6 cm² or less) of the small thin wood pieces forming the wooden board.

The wooden board according to the first to third aspects includes only the small thin wood pieces in one type of size obtained as follows. In the step P1, which will be described later, thin wood pieces with a specific thickness are obtained. In the step P2, which will also be described later, these thin wood pieces are crushed in a first direction (i.e., along fibers) of the wood pieces and a second direction orthogonal to the first direction (i.e., orthogonal to the fibers). Being significantly thin within the narrow range from 0.05 mm to 0.35 mm, the large number of small thin wood pieces are uniform in thickness with little variation. In addition, the aspect ratio defined by (the mean first length)/(the mean second length) is within the certain range, and thus the small thin wood pieces uniform in shape within a certain range are aggregated into a homogeneous wooden board. Moreover, including the top and bottom surfaces with the area within the narrow range of 6 cm² or less, the large number of small thin wood pieces are uniform in area (size) with little variation. Accordingly, the wooden board not only has a higher strength but is less warped by moisture absorption and desorption, and thus exhibits dimensional stability as excellent as tropical plywood. In addition, since the large number of small thin wood pieces are uniform in thickness, shape, and size, the resultant wooden board has no significant unevenness on the surfaces unlike typical OSBs and thus exhibits excellent surface properties. Since the large number of small thin wood pieces uniform in size are aggregated and laminated, the wooden board is produced easily.

Like the first to third aspects, a fourth aspect of the present invention is directed to a wooden board obtained by laminating, adhering, and integrating, in an aggregated state, a large number of small thin wood pieces with top and bottom surfaces extending along fibers. The small thin wood pieces forming this wooden board each includes the top and bottom surfaces with an area of 6 cm² or less, has a thickness ranging from 0.05 mm to 0.35 mm between the top and bottom surfaces, and has an aspect ratio ranging from 4 to 80 where the aspect ratio is defined by (a first length along the fibers)/(a second length in a direction orthogonal to the fibers).

In the fourth aspect, the wooden board is obtained by laminating, adhering, and integrating, in the aggregated state, the large number of small thin wood pieces with the area of 6 cm² or less, the thickness ranging from 0.05 mm to 0.35 mm, and the aspect ratio ranging from 4 to 80. That is, the fourth aspect specifies all the three of the thickness (0.05 mm to 0.35 mm), the aspect ratio (4 to 80), and the area (6 cm² or less) of the small thin wooden pieces forming the wooden board. This configuration further increases the dimensional stability and further improves the surface properties of the wooden board.

Like the first to fourth aspects, a fifth aspect of the present invention is directed to a wooden board obtained by laminating, adhering, and integrating, in an aggregated state, a large number of small thin wood pieces with top and bottom surfaces extending along fibers. The small thin wood pieces forming this wooden board each have a bulk density ranging from 10 kg/m³ to 150 kg/m³, and includes the top and bottom surfaces with an area of 6 cm² or less.

In the fifth aspect, the wooden board is obtained by laminating, adhering, and integrating, in the aggregated state, the large number of small thin wood pieces having the bulk density ranging from 10 kg/m³ to 150 kg/m³ and including the top and bottom surfaces with the area of 6 cm² or less.

Like in the first to fourth aspects, a wooden board according to a fifth aspect of the present invention is made only of small thin wood pieces in one type of size. With the specified bulk density and area of the top and bottom surfaces, the large number of small thin wood pieces are significantly thin and uniform in thickness with little variation. In addition, the large number of small thin wood pieces are uniform in size with little variation in the first length in the first direction (i.e., along fibers) and the second length in the second direction (i.e., orthogonal to the fibers). In this manner, the small thin wood pieces uniform in thickness and size within certain ranges are aggregated into a homogeneous wooden board. Accordingly, the wooden board not only has a higher strength but is less warped by moisture absorption and desorption, and thus exhibits dimensional stability as excellent as tropical plywood. In addition, since the large number of small thin wood pieces are uniform in thickness and size, the resultant wooden board has no significant unevenness on the surfaces unlike usual OSBs and thus exhibits excellent surface properties. Since the large number of small thin wood pieces uniform in thickness and size are aggregated and laminated, the wooden board is produced easily.

A sixth aspect of the present invention is directed to a laminated wooden board obtained by laminating and integrating a wooden layer on each of the top and bottom surfaces of the wooden board of any one of the first to fifth aspects. The wooden layer serving as each of the top and bottom layers of this wooden layer is obtained by laminating, adhering, and integrating, in an aggregated state, tiny thin wood pieces with a smaller area than the small thin wood pieces. Note that the "area" is represented by a numerical value obtained by multiplying the first length by the second length, and refers to the area of the top and bottom surfaces along the fibers.

In the sixth aspect, the laminated wooden board is obtained by laminating and integrating the wooden board serving as the core layer and the wooden layers serving as the top and bottom surfaces. The wooden layer is obtained by laminating, adhering, and integrating, in the aggregated state, the large number of tiny thin wood pieces with the smaller area than the small thin wood pieces.

In this manner, the laminated wooden board includes only the small thin wood pieces in two types of sizes obtained as follows. In the step P1, which will be described later, thin wood pieces with a specific thickness are obtained. In the steps P2 and P6, which will also be described later, these thin wood pieces are crushed in a first direction (i.e., along fibers) of the wood pieces and a second direction orthogonal to the first direction (i.e., orthogonal to the fibers). Including, as the core layer, the wooden board made of the small thin wood pieces, the laminated wooden board provides at least the same advantages as the wooden board according to the first aspect. In the laminated wooden board, the wooden layer made of a large number of tiny thin wood pieces with a smaller area than the small thin wood pieces is laminated on each surface of the wooden board so as to serve as the front or back layer. The laminated wooden board has no significant unevenness on the surfaces unlike usual OSBs and thus exhibits further improved surface properties that are as excellent as MDFs. The aggregate of the large number of tiny thin wood pieces uniform in size, the aggregate of the large number of small thin wood pieces uniform in size, and the aggregate of the large number of tiny thin wood pieces are sequentially laminated and integrated. Accordingly, the laminated wooden board is produced easily.

A seventh aspect of the present invention is directed to the wooden board (i.e., the laminated wooden board) of the sixth aspect. In the seventh aspect, the wooden layer has a thickness accounting for 5% to 40% of a total thickness of the wooden board. With this configuration, the laminated wooden board can exhibit both a high strength and excellent surface properties.

An eighth aspect of the present invention is directed to the wooden board of any one of the first to the seventh aspects with a density ranging from 500 kg/m³ to 800 kg/m³. This configuration further increases the strength of the wooden board.

A ninth aspect is directed to the wooden board of any one of the first to the eighth aspects. In the ninth aspect, the wooden board has a root mean square height Sq ranging from 0.005 µm to 0.015 µm on a surface, or an arithmetic average height Sa ranging from 0.002 µm to 0.007 µm on the surface. This configuration further improves the surface properties of the wooden board. In the present specification, the surface properties of the wooden board are the surface characteristics of the wooden board adjusted to a product thickness using a sander of #150, for example.

### ADVANTAGES OF THE INVENTION

As described above, in the present invention, a wooden board obtained by laminating, adhering, and integrating, in an aggregated state, a large number of small thin wood pieces with top and bottom surfaces extending along fibers. For the small thin wood pieces, at least two of the following are specified within narrow ranges: the thicknesses, the aspect ratio defined by (the first length)/(the second length); or the size of the top and bottom surfaces. Alternatively, the bulk density and the area of the top and bottom surfaces are specified in narrow ranges. The large number of small thin wood pieces are uniform in size with little variation. Accordingly, the wooden board has a higher strength, dimensional stability and surface properties as excellent as tropical plywood, and is thus produced easily.

### BRIEF DESCRIPTION OF THE DRAWINGS

[FIG. 1] FIG. 1 is a cross-sectional view of a wooden board according to a first embodiment of the present invention.
[FIG. 2] FIG. 2 is an enlarged cross-sectional view of the main part of the wooden board according to the first embodiment.
[FIG. 3] FIG. 3 is an enlarged perspective view schematically showing small thin wooden pieces forming the wooden board according to the first embodiment.
[FIG. 4] FIG. 4 shows a process of producing the wooden board according to the first embodiment.
[FIG. 5] FIG. 5 is an enlarged cross-sectional view showing that the wooden board according to the first embodiment is obtained by hot-pressing a sheet (mat) which is an aggregate of small thin wood pieces.
[FIG. 6] FIG. 6 shows the characteristics of the wooden board according to the first embodiment in comparison with boards of other materials.
[FIG. 7] FIG. 7 is a cross-sectional view of a wooden board according to a second embodiment of the present invention.
[FIG. 8] FIG. 8 is an enlarged cross-sectional view of the main part of the wooden board according to the first embodiment.
[FIG. 9] FIG. 9 is an enlarged perspective view schematically showing tiny thin wood pieces forming a wooden layer according to the second embodiment.
[FIG. 10] FIG. 10 shows a process of producing the wooden board according to the second embodiment.
[FIG. 11] FIG. 11 is an enlarged cross-sectional view showing that the wooden board according to the second embodiment is obtained by hot-pressing sheets which are each an aggregate of small thin wood pieces or tiny thin wood pieces.
[FIG. 12] FIG. 12 shows the characteristics of the wooden board according to the second embodiment in comparison with boards of other materials.

### DESCRIPTION OF EMBODIMENTS

Now, embodiments of the present invention will be described in detail with reference to the drawings. Note that the following description of the embodiments is merely an example in nature, and is not intended to limit the scope, applications, or use of the present disclosure.

### [First Embodiment]

### <Wooden Board>

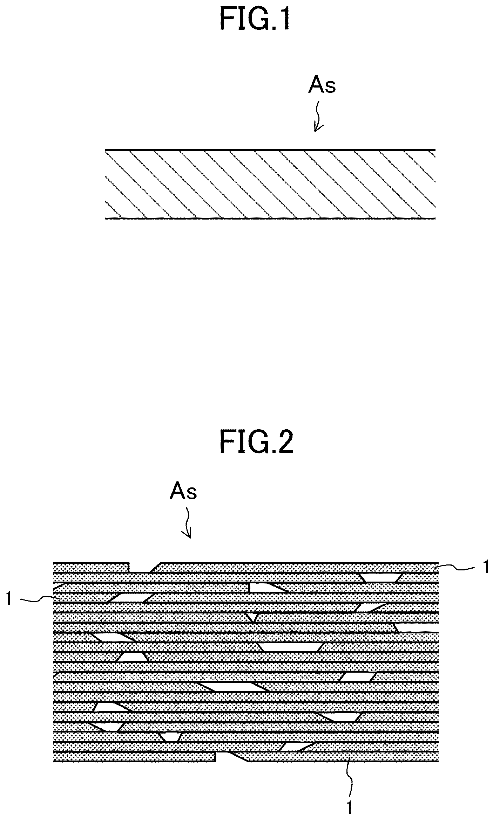

FIG. 1 shows a wooden board As according to a first embodiment of the present invention. The wooden board As has a density ranging from 500 kg/m³ to 800 kg/m³ and a thickness ranging from 3 mm to 12 mm, for example. A wooden board As with a small thicknesses ranging from 3 mm to 6 mm are used as, for example, an inner wall material for a cargo bed of a vehicle, such as a truck, a base material for an indoor cushioned floor, a decorative surface material, and an interior material, such as an interior building material (e.g., a riser). A wooden board As with a medium thickness ranging from 6 mm to 12 mm is used as the base material of an indoor soundproof floor or a floor for walking with shoes on, or an entrance finishing material, for example. In this manner, the wooden board As is used as a substitute for the existing plywood for a base plate. This wooden board As will be described in detail.

As shown in an enlarged view of FIG. 2, the wooden board As is obtained by laminating, adhering, and integrating, in an aggregated state, a large number of small thin wood pieces 1, 1, ... with top and bottom surfaces extending along the fibers. The large number of small thin wood pieces 1, 1, ... have one type of thickness.

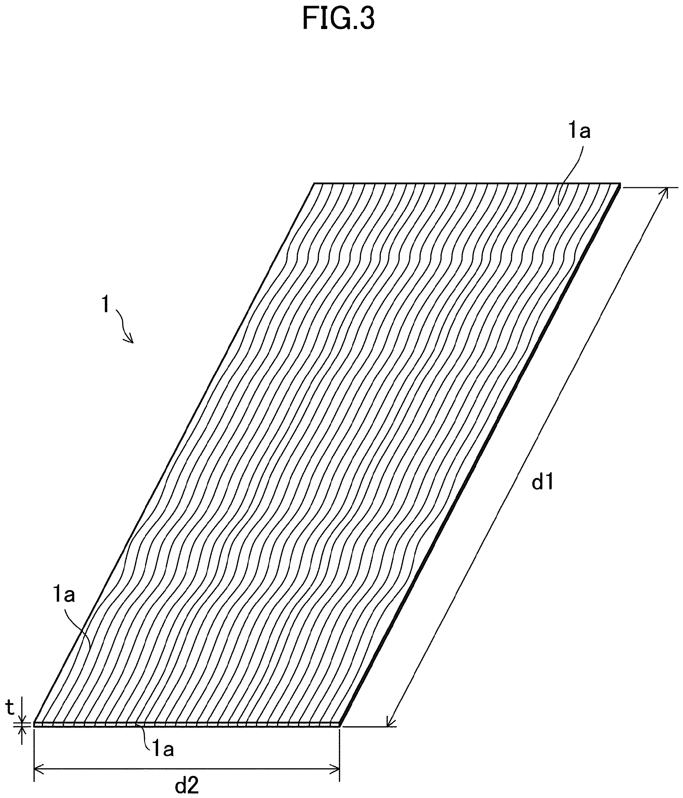

The small thin wood pieces 1 will be described. As shown in an enlarged view of FIG. 3, the small thin wood pieces 1 have a thickness t preferably ranging from 0.05 mm to 0.35 mm (0.05 mm or more and 0.35 mm or less), more preferably ranging from 0.10 mm to 0.30 mm, still more preferably ranging from 0.15 mm to 0.25 mm, and further more preferably ranging from 0.15 mm to 0.20 mm. These thin pieces 1, 1, ... with the small thickness t determine the characteristics of the wooden board As. The thickness t of the small thin wood pieces 1 is expressed in mean. In other words, while strands (also referred to as "flakes" in the present invention) usually used as an element (i.e., a constituent material) of typical OSBs typically have a thickness ranging from about 0.6 mm to about 1.5 mm, the small thin wood pieces 1 are thin pieces thinner than the strands.

The following is the relationship between the small thin wood pieces 1 and the advantages of the wooden board As made of the small thin wood pieces 1 as a constituent material. The small thin wood pieces 1 have a thickness t within the specific narrow range described above between the top and bottom surfaces. For example, a wood board As is made of small thin wood pieces 1 with a thickness t of 0.3 mm, where the first and second lengths d1 and d2 are determined by the aspect ratio, the area, or the bulk density which will be described later. This wooden board As has a significantly higher Young's modulus of bending (i.e., rigidity) than a comparative wooden board (specifically the wooden board As has 4560, while the comparative wooden board has 3764), where the comparative wooden board is made of, as a constituent material, comparative thin wood pieces with a thickness t changed to 0.4 mm. As compared to the comparative wooden board, the wooden board As is significantly excellent in the root mean square height Sq and the arithmetic mean height Sa on the surface measured after water absorption and drying (specifically, the wooden board As has Sq of 0.008 µm, while the comparative wooden board has Sq of 0.079 µm. The wooden board As has Sa of 0.005 µm, while the comparative wooden board has Sa of 0.059 µm). Note that Sq and Sa of the wooden board As fall within the range of the surface properties of the wooden board As which will be described later. That is, the wooden board As exhibits particularly improved strength and surface properties by specifying the thicknesses of the small thin wood pieces 1 to 0.35 mm or less.

The small thin wood pieces 1 have an aspect ratio (d1/d2) ranging from 1 to 80 where the aspect ratio is defined by (a mean first length d1)/(a mean second length d2) which is a ratio between the mean of a first length d1 in a first direction and the mean of a second length d2 in a second direction orthogonal to the first direction in one preferred embodiment. That is, the small thin wood pieces 1 may be in a square shape or an elongated shape (i.e., a strip shape). In particular, the small thin wood pieces 1 are in an elongated shape with an aspect ratio ranging from 4 to 80 in one more preferred embodiment. With respect to the small thin wood pieces 1 in an elongated shape, the first length d1 is the longitudinal size (i.e., length). The small thin wood pieces 1 include fibers 1a, 1a, ... such as vessels or tracheids, for example, and the first length d1 is the length along the fibers 1a. The second length d2 is the transverse size (i.e., width), for example, the size in the direction orthogonal to the fibers. The aspect ratio preferably ranges from 2 to 70, more preferably ranges from 3 to 55, and still more preferably ranges from 4 to 40. As will be described later, although not shown in the drawings, the small thin wood pieces 1 are obtained by crushing thin wood pieces (also referred to as "cut thin wood pieces") as cut from raw timber into smaller sizes. The small thin wood pieces 1 are called so to be distinguished from these cut thin wood pieces.

The small thin wood pieces 1 have the top and bottom surfaces with an area (a numerical value obtained by multiplying the first length d1 by the second length d2, i.e., d1 × d2) of preferably 64 cm² or less, more preferably 32 cm² or less, still more preferably 16 cm² or less, and further more preferably 6 cm² or less. The lower limit of the area is 0.5 cm² or more, for example.

The small thin wood pieces 1 have a bulk density ranging from 10 kg/m³ to 150 kg/m³ in one preferred embodiment. In the present specification, the bulk density is defined by the mass of the small thin wood pieces 1, 1, ... with respect to the volume of the small thin wood pieces 1, 1, ... filling a container (hereinafter also referred to as a "measurement container") with a certain volume, and is represented by the following equation (1).
[Math 1] Bulk Density = Mass of Small Thin Wood Pieces Filling Measurement Container/Volume of Small Thin Wood Pieces

In the equation (1), the "Mass of Small Thin Wood Pieces Filling Measurement Container" is the total mass of the large number of small thin wood pieces 1, 1, ... that can fill the measurement container, excluding the mass of the measurement container. The mass of the small thin wood pieces filling the measurement container is measured, for example, as follows. The small thin wood pieces 1, 1, ... are piled up in the measurement container without gaps. The tops of the piled small thin wood pieces 1, 1, ... are flattened to be flush with each other using a ruler, spatula, or any other suitable tool without applying any pressure. In this state, the mass (i.e., the sum of the masses of the measurement container and the large number of small thin wood pieces 1, 1, . . . ) was measured. The mass of the measurement container is then subtracted from the obtained mass. The mass can be measured using a typically commercially available measuring instrument.

In the equation (1), the "Volume of Small Thin Wood Pieces" refers to the total volume of the large number of small thin wood pieces 1, 1, ... that can fill the measurement container. Specifically, the volume refers to the total volume of the large number of small thin wood pieces 1, 1, ... contained flush in the measurement container. Used as an approximate value to the "Volume of Small Thin Wood Pieces" may be the internal volume of the measurement container.

The bulk density defined as described above can be the density when the small thin wood pieces 1, 1, ... fully fill the measurement container and the internal volume thereof is regarded as the volume. The small thin wood pieces 1, 1, ... with a bulk density within the specific range from 10 kg/m³ to 150 kg/m³ determine the characteristics of the wooden board As. Specifically, the strands (i.e., flakes) of an OSB have a bulk density greatly exceeding 150 kg/m³. Here, the bulk density correlates with the thickness of the pieces. Specifically, there is believed to be a tendency that the bulk density decreases with a decrease in the thickness of the pieces. Since the small thin wood pieces 1 are thinner pieces than the strands of an OSB and thus believed to have a lower bulk density. The small thin wood pieces 1 have a bulk density preferably ranging from 10 kg/m³ to 100 kg/m³, more preferably ranging from 20 kg/m³ to 90 kg/m³, still more preferably ranging from 30 kg/m³ to 80 kg/m³, and further more preferably ranging from 40 kg/m³ to 70 kg/m³.

The small thin wood pieces 1, 1, ... with a bulk density within a specific range are thinner pieces than the strands (i.e., flakes) of an OSB, and have the first length d1 in the first direction and the second length d2 in the second direction orthogonal to the first direction both within certain narrow ranges. That is, the bulk density determines the thicknesses t and the first and second lengths d1 and d2 of the small thin wood pieces 1. Both the first and second lengths d1 and d2 of the small thin wood pieces 1 are expressed in mean.

For some of the small thin wood pieces 1, 1, ... (hereinafter, referred to as "first small thin wood pieces 1, 1, . . . " when individually described) with the configuration described above, at least two of the following are specified within narrow ranges: the thickness t, the aspect ratio (d1/d2) defined by (the first length d1)/(the second length d2), or the area (d1 × d2) of the top and bottom surfaces. Others of the small thin wood pieces 1, 1, ... (hereinafter referred to as "second small thin wood pieces 1, 1, ... " when individually described), the bulk density and the area of the top and bottom surfaces are specified within narrow ranges.

The tree species used for the small thin wood pieces 1 is not particularly limited. Examples include a tropical tree, a broadleaf tree, or any other suitable tree species. Examples include cedar, cypress, firs such as Douglas fir, acacia, aspen, poplar, pines (e.g., hard pine, soft pine, and radiata pine), birch, and rubber (i.e., rubber tree). The tree species are however not limited thereto and may further include various tree species. Examples of the various tree species include domestic timber, boreal timber, tropical timber, and other overseas timber. Examples of the domestic timber include Sakhalin fir, Japanese larch, Ezo spruce, Sawara cypress, Hiba cypress, Japanese torreya, Japanese hemlock, Japanese yew, various pines, paulownia, maple, birch (white birch), chinquapin, beech, oak, fir, sawtooth oak, Japanese oak, camphor, and Japanese zelkova. Examples of the boreal timber include cypress, Alaska cedar, red cedar, noble fir, spruce, western hemlock, and redwood. Examples of the tropical timber include agathis, terminalia, lauan, meranti, jongkong, kamerere, calampayan, amberoi, melina, teak, apitong, and sengonlaut. Examples of other overseas timber include balsa, cedro, mahogany, lignum vitae, acacia mangium, Mediterranean pine, bamboo, sorghum, and kamerere. Any timber is applicable.

As the physical properties, the density of the small thin wood pieces 1 is preferably 250 kg/m³ or more, and more preferably 300 kg/m³ or more. On the other hand, the density is preferably 800 kg/m³ or less, more preferably 500 kg/m³ or less, and still more preferably 400 kg/m³ or less. A density less than 250 kg/m³ requires a thicker sheet to form the wooden board As with the same density and strength and a higher pressure for hot-pressing in the press forming step.

The small thin wood pieces 1 may have a density exceeding 800 kg/m³, which are however not easily available. That is, the upper limit of the density is not necessarily 800 kg/m³ and may be higher, if small thin wood pieces 1 with a density exceeding 800 kg/m³ are easily available.

The small thin wood pieces 1 have a water content preferably ranging from about 2% to about 20%, and more preferably ranging from 2% to 8%. It takes a longer time to soften the small thin wood pieces 1 with a water content less than 2% in the hot-pressing in the press forming step, that is, a longer pressing period, which may lower the strength.

On the other hand, it takes a longer time to heat and compress the small thin wood pieces 1 with a water content exceeding 20% in the hot-pressing. In addition, the curing of the adhesive may be inhibited, which may lower the strength.

In the wooden board As, the fibers 1a, 1a, ... of the large number of small thin wood pieces 1, 1, ... may be oriented in a reference direction (i.e., the longitudinal direction of the fibers corresponds to the reference direction), but not necessarily have such an orientation and may lie randomly. With the expression "the fibers 1a, 1a, ... of the large number of small thin wood pieces 1, 1, ... may be oriented in a reference direction", the fibers 1a, 1a, ... of all the small thin wood pieces 1, 1, ... are not necessarily oriented in exactly the same direction in the wooden board As, in other words, the oriented fibers of the small thin wood pieces 1, 1, ... are not necessarily parallel to each other. Some of the small thin wood pieces 1, 1, ... may include fibers inclined at a certain angle (e.g., about 20°) from the reference direction.

### <Method of Producing Wooden Board>

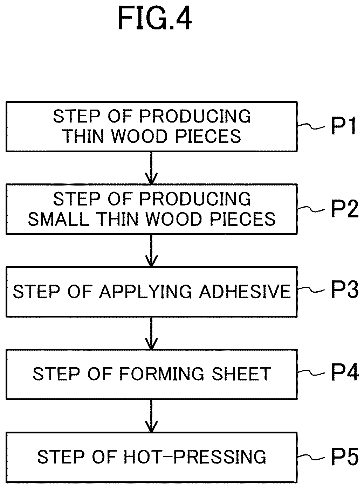

Next, methods of producing the small thin wood pieces 1 and producing the wooden board As from the small thin wood pieces 1 will be described with reference to FIG. 4. The method of producing the small thin wood pieces 1 includes a step P1 of producing thin wood pieces and a step P2 of producing small thin wood pieces. The method of the wooden board As further includes subsequent steps, namely, a step P3 of applying an adhesive, a step P4 of forming a sheet (mat), and a step P5 of hot-pressing.

### (Step P1 of Producing Thin Wood Pieces)

Raw timber, such as a log or a thinned wood, as a material is cut into short lengths and its bark is removed if necessary, and the water content is then adjusted in some cases. The raw timber is cut with an outer or inner blade cutter (or strander) into a large number of thin wood pieces (cut thin wood pieces) thinner and smaller than flakes usually used as constituent materials of OSBs. The thin wood pieces can also be made of a scrap material, a waste material, or a waste pallet material available at a construction or any other site. Used here is a typical cutter. The thickness of the thin wood pieces is adjusted by the speed of feeding the raw timber into the cutter. The thin wood pieces (i.e., the cut thin wood pieces) formed by this cutting are different from the small thin wood pieces 1 forming the wooden board As according to this embodiment, and have a larger area (specifically, length in the direction orthogonal to the fibers) than the small thin wood pieces 1.

At this time, cutting is performed so that fibers appear linearly on the top and bottom surfaces of the thin wood pieces and the resultant thickness is equal to the thickness t of the small thin wood pieces 1. This is because, in the subsequent steps, the thickness t of the small thin wood pieces 1 does not change basically from the thickness of the cut thin wood pieces. The thickness of the cut thin wood pieces remains as the thickness t of the small thin wood pieces 1.

The cut thin wood pieces obtained in this step P1 may pass through a sieve (e.g., a mesh with Φ5 mm or more) or any other suitable tool so as to be sorted (i.e., classified) according to sizes. Through the procedure (i.e., the classification step), thin wood pieces may be obtained in a size (within a size range of the first small thin wood pieces 1, 1, . . . ) corresponding to that of the small thin wood pieces 1, 1, ... obtained after the subsequent step P2 of producing small thin wood pieces. In this case, these thin wood pieces can be used as the small thin wood pieces 1, 1, ... in the step P3 of applying an adhesive, without being subjected to the step P2 of producing small thin wood pieces.

### (Step P2 of Producing Small Thin Wood Pieces)

Next, after the cutting, the thin wood pieces (cut thin wood pieces) classified as necessary are crushed using a crusher into sizes in the direction orthogonal to the fibers smaller than the thin wood pieces immediately after the cutting to obtain small thin wood pieces 1, 1, ... for forming the wooden board As. The crusher may be a hammer mill, a pin mill, or a jet mill without any cutter, or may be a knife piecer or a cutter mill with a cutter. At this time, made of the cut thin wood pieces crushed in the transverse direction so as to be split along the fibers (i.e., the longitudinal direction), elongated small thin wood pieces 1, 1, ... can be produced. In other words, with a force (impact) applied orthogonally to the fibers, the cut thin wood pieces are not easily broken. On the other hand, with a force applied along the fibers, the thin wood pieces are easily broken. Even if curved, the cut thin wood pieces are divided into planes by the crushing. The force is not necessarily applied to the cut thin wood pieces along the fibers. With a force applied in a random direction, the cut thin wood pieces are usually broken from weak points (easily broken in weak directions). The force (force in the direction orthogonal to the fibers) of connecting the fibers of the cut thin wood pieces is much weaker than the force along the fibers. When crushed (a force is applied) in a random direction using the typical crusher described above, the cut thin wood pieces are broken along the fibers to be shorter in the direction orthogonal to the fibers into elongated small thin wood pieces 1, 1, . . . .

Even if the cut thin wood pieces have knots, such knots are more fragile than other portions, and thus pulverized by crushing and removed in the subsequent classification step.

A crusher with a cutter may unintentionally crush the cut thin wood pieces in the direction orthogonal to the fibers. By contrast, a crusher without any cutter is less likely to have such the problem and is thus used in one preferred embodiment to crush the cut thin wood pieces.

In this manner, raw timber is subjected not to one stage of the cutting step only but to two stages including the subsequent crushing step. Accordingly, from the cut thin wood pieces, which are thinner and smaller than the flakes, high-strength small thin wood pieces 1, 1, ... can be produced easily in a required size without knots.

The process may include a classification step of causing the small thin wood pieces 1, 1, ... obtained in the crushing step to pass through a sieve or any other suitable tool, and sorting (classifying) the small thin wood pieces 1, 1, .... according to sizes. Accordingly, the large number of small thin wood pieces 1, 1, ... become finer and more uniform in size and shape. From the foregoing, the small thin wood pieces 1 are produced.

### (Step P3 of Applying Adhesive)

The large number of small thin wood pieces 1, 1, ... , fine and uniform in size and shape are obtained by sorting in the step P2 of producing small thin wood pieces. The step P3 of applying an adhesive is then performed. These small thin wood pieces 1, 1, ... are transferred into adhesive application equipment and applied with an adhesive. The adhesive may be an isocyanate-based adhesive, for example. Besides, for example, a phenolic resin, an amine-based adhesive, such as a urea resin or a melamine resin, or a natural product for wood (tannin)-based adhesive may be used. In combination with the adhesive, a generally used water repellent may be used.

### (Step P4 of Forming Sheet)

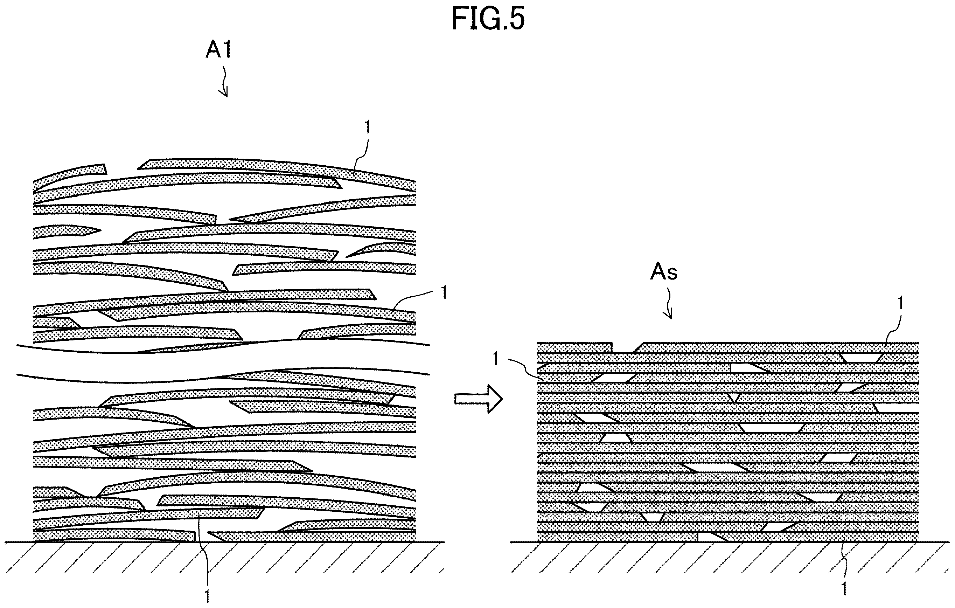

Next, as shown on the left of FIG. 5, the large number of small thin wood pieces 1, 1, ... applied with the adhesive are laminated (stacked) to a predetermined thickness (i.e., height) in an aggregated state along the thickness with or without being oriented along the fibers to form a sheet A1 of the small thin wood pieces 1, 1, .... In order to form a wooden board As with a thickness of 4 mm, for example, small thin wood pieces 1, 1, ... with a thickness t of 0.2 mm are stacked so that the resultant sheet A1 has a thickness (i.e., height) of about 40 mm.

### (Step P5 of Hot-Pressing)

The sheet A1 is transferred into a hot press machine, set between hot plates, and subjected to hot-pressing at predetermined pressure and temperature in the hot press machine so as to be compressed and integrally formed by curing the adhesive. Accordingly, the wooden board As shown in FIG. 1 is formed.

At this time, as shown in FIG. 5, the illustrated sheet A1 with a thickness of about 40 mm is compressed into the wooden board As with a thickness of 4 mm, for example, that is, a one-tenth thickness. The pressing temperature for the hot-pressing is not particularly limited but may range from 100°C to 180°C, for example. The pressing pressure in the hot-pressing ranges from 2 N/mm² to 4 N/mm², for example. The pressing period is one to two minutes, for example. The pressing period depends on the thickness of the wooden board As and may be shorter than one minute or longer than two minutes. A preheating using a heating machine may be performed before the hot-pressing using the hot press machine.

The small thin wood pieces 1, 1, ... have their knots removed and are kept in a fine size without variation and the whole sheet A1 is thus homogeneous, which causes less variation in the strength of the wooden board As. On the other hand, a strand board made of large strands (i.e., flakes) has, due to a non-uniform sheet including knots, for example, low-density or small-thickness and low-strength portions (or spots), causing variation in the strength. In addition, the sheet A1 made of thinner small thin wood pieces 1, 1, ... has a higher homogeneity, and the resultant wooden board As thus tends to exhibit a higher strength. In general, a strand board made of large strands (i.e., flakes) can exhibit a higher strength. In the present invention, the wooden board As has homogeneity and strength with the small thin wood pieces 1 obtained by further miniaturizing the thin wood pieces (i.e., cut thin wood pieces), which are thinner and smaller than the flakes, by crushing.

The small thin wood pieces 1, 1, ... are small and uniform in size with gaps left evenly in the sheet A1. Even if the small thin wood pieces 1, 1, ... in the sheet A1 are hot-pressed, while containing a relatively large amount of moisture, vapor generated by evaporation of the moisture is smoothly released from the sheet A1. That is, as shown on the left of FIG. 5, the sheet A1 includes a large number of small voids between the adjacent small thin wood pieces 1, 1, .... These voids communicate with each other not only along and orthogonally to the fibers of the small thin wood pieces 1, 1, ... but also along the thickness, and are continuous three-dimensionally. This configuration causes less puncture at the stop of applying pressure onto the wooden board As.

Through these steps, the wooden board As is formed which has a density ranging from 500 kg/m³ to 800 kg/m³ and a Young's modulus of bending ranging from 3.5 GPa to 7.0 GPa. As shown on the right of FIG. 5, this wooden board As includes (retains) a large number of three-dimensionally continuous small voids. Accordingly, the wooden board As also has an excellent air permeability.

### (Other Steps)

The method of producing the wooden board As may further include, as another step, a finish step after the step P5 of hot-pressing. In the finish step, the wooden board As is cured to an equilibrium water content and then the top and bottom surfaces of the wooden board As are ground by a sander to adjust the final thicknesses of the wooden board As. The sander may be a generally used one and is #150, for example. Through this finish step, the wooden board As with more excellent surface properties can be obtained.

### <Surface Properties of Wooden Board>

The wooden board As preferably has a root mean square height Sq ranging from 0.005 µm to 0.015 µm or an arithmetic mean height Sa ranging from 0.002 µm to 0.007 µm on the surface. The surface of the wooden board As refers to the surface of the wooden board As after the finish step, and, for example, refers to the surface of the wooden board As adjusted to a product thickness using a sander #150. The root mean square height Sq and the arithmetic mean height Sa are surface roughness parameters representing the surface properties under ISO 25178. That is, the wooden board As has excellent surface properties with the parameters Sq and Sa specifying the surface properties of the wooden board As controlled within specific ranges.

The root mean square height Sq is a parameter corresponding to the standard deviation of the distance from the mean plane, and corresponds to the standard deviation of the height. With a decreasing root mean square height Sq, the surface of the wooden board As has less significant unevenness and thus exhibits excellent surface properties. Specifically, made of small thin wood pieces 1, 1, ... with a thickness t of 0.35 mm or less, the wooden board As has a root mean square height Sq ranging from about 0.005 µm to about 0.015 µm on the surface. Made of small thin wood pieces 1, 1, ... with a thickness t of 0.25 mm or less (preferably 0.20 mm or less), the wooden board As has a root mean square height Sq ranging from about 0.005 µm to about 0.008 µm on the surface. With a surface roughness as low as an MDF with excellent surface properties, the wooden board As has more excellent surface properties and is preferable.

The arithmetic mean height Sa represents the mean of the absolute values of the differences in height between various points and the mean plane of the surface. With a decreasing arithmetic mean height Sa, the surface of the wooden board As has less significant unevenness and thus exhibits excellent surface properties. Specifically, made of small thin wood pieces 1, 1, ... with a thickness t of 0.35 mm or less, the wooden board As has an arithmetic mean height Sa ranging from about 0.002 µm to about 0.007 µm on the surface. Made of small thin wood pieces 1, 1, ... with a thickness t of 0.25 mm or less (preferably 0.20 mm or less), the wooden board As has an arithmetic mean height Sa ranging from about 0.002 µm to about 0.005 µm on the surface. With a surface roughness as low as an MDF with excellent surface properties, the wooden board As exhibits more excellent surface properties and is thus preferable.

The surface properties of the wooden board As are not necessarily specified by the root mean square height Sq and the arithmetic mean height Sa, but may be specified by the skewness Ssk, the maximum valley depth Sv, the maximum height Sz which is the sum of the maximum peak height Sp and the maximum valley depth Sv, or the kurtosis Sku, for example.

The wooden board As according to the embodiment described above can provide the following advantages.

The wooden board As is a single layer obtained by laminating, adhering, and integrating a large number of small thin wood pieces 1, 1, ... in an aggregated state.

The single-layer wooden board As may include only one type, namely, the first small thin wood pieces 1, 1, .... For the first small thin wood pieces 1, 1, ... , at least two of the following are specified within narrow ranges: the thickness t; the aspect ratio (d1/d2) defined by (a mean first length d1)/(a mean second length d2) which is a ratio between the mean of the first length d1 in the first direction (i.e., along the fibers) and the mean of the second length d2 in the second direction (i.e., orthogonal to the fibers); or the area of the top and bottom surfaces. Specifically, with a significantly thin thickness t within the narrow range from 0.05 mm to 0.35 mm, the large number of the first small thin wood pieces 1, 1, ... are uniform in thickness t with little variation. In addition, since the aspect ratio (d1/d2) of the first small thin wood pieces falls within a certain range, the first small thin wood pieces 1, 1, ... uniform in size within a certain range are aggregated into a homogeneous wooden board As. Moreover, including the top and bottom surfaces with an area within the narrow range of 6 cm² or less, the large number of first small thin wood pieces 1, 1, ... are uniform in area (size) with little variation. Accordingly, the wooden board As not only has a higher strength but is less warped by moisture absorption and desorption, and thus exhibits dimensional stability as excellent as tropical plywood. In addition, since the large number of first small thin wood pieces 1, 1, ... are uniform in size, the wooden board As has no significant unevenness on the surfaces unlike typical OSBs and thus exhibits excellent surface properties. Since the large number of first small thin wood pieces 1, 1, ... uniform in shape are aggregated and laminated, the wooden board As is produced easily.

In particular, made of the first small thin wood pieces 1, 1, ... with a mean thickness t ranging from 0.15 mm to 0.25 mm and in an elongated shape with an aspect ratio (d1/d2) ranging from 4 to 40, the wooden board As has further improved dimensional stability and surface properties.

On the other hand, the single-layer wooden board As may include only one type, namely, the second small thin wood pieces 1, 1, .... For the second small thin wood pieces 1, 1, ..., the bulk density and the area of the top and bottom surfaces are specified within narrow ranges. Specifically, with a bulk density within the narrow range from 10 kg/m³ to 150 kg/m³, the large number of the second small thin wood pieces 1, 1, ... are uniform in thickness t with little variation and in first and second lengths d1 and d2 within certain ranges. Accordingly, the second small thin wood pieces 1, 1, ... uniform in thickness and size (area of the top and bottom surfaces) within the certain range of 6 cm² or less are aggregated into a homogeneous wooden board As. Accordingly, the wooden board As not only has a higher strength but is less warped by moisture absorption and desorption, and thus exhibits dimensional stability as excellent as tropical plywood. In addition, since the large number of second small thin wood pieces 1, 1, . . . are uniform in thickness and area, the wooden board As has no significant unevenness on the surfaces unlike typical OSBs and thus exhibits excellent surface properties. Since the large number of second small thin wood pieces 1, 1, ... uniform in thickness and size are aggregated and laminated, and the wooden board As is produced easily.

In particular, assume that the large number of second small thin wood pieces 1, 1, ... are significantly thin with a mean thickness t ranging from 0.05 mm to 0.35 mm and have a bulk density ranging from 20 kg/m³ to 90 kg/m³. In this case, the large number of second small thin wood pieces 1, 1, ... are uniform in thickness t and area, which further improves the dimensional stability and surface properties of the wooden board As.

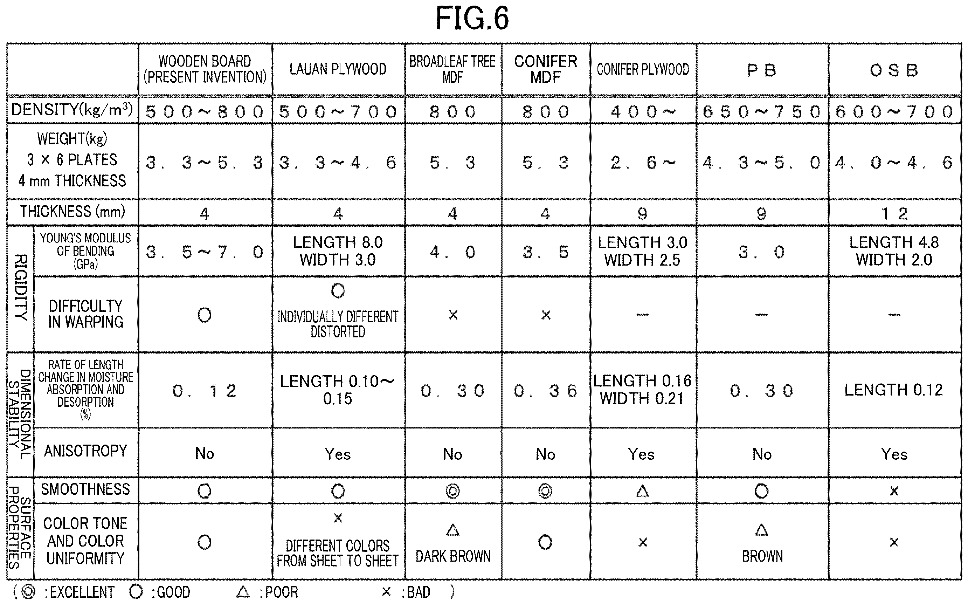

FIG. 6 illustrates the characteristics of the wooden board As according to the present invention in comparison with boards made of other materials. The wooden board As is as large as lauan plywood in the Young's modulus of bending, the rate of change in the length at the time of moisture absorption and desorption, and the smoothness. The wooden board As is superior to lauan plywood in the anisotropy as the dimensional stability; and the color tone and the color uniformity as the surface properties. As compared to an OSB, the wooden board As has a uniform Young's modulus of bending in the longitudinal and transverse directions, and is excellent in the anisotropy as the dimensional stability; and the smoothness, the color tone, and the color uniformity as the surface properties. That is, the wooden board As has a high strength and excellent dimensional stability and surface properties.

### [Second Embodiment]

### <Wooden Board (Laminated Wooden Board)>

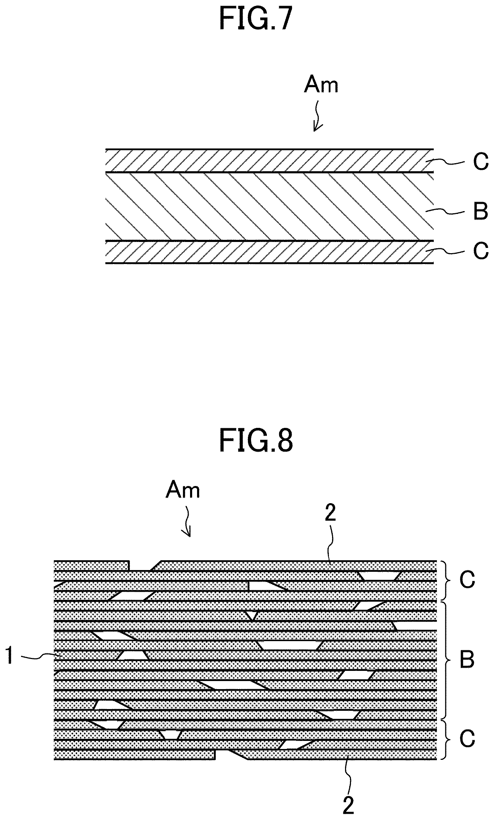

FIG. 7 shows a wooden board Am according to a second embodiment of the present invention. The wooden board Am according to this embodiment is obtained by laminating and integrating wooden layers on the top and bottom surfaces of the wooden board As according to the first embodiment, and can also be referred to as a "laminated wooden board." The wooden board Am will also referred to as a "laminated wooden board Am." Note that the configuration of the wooden board As other than the wooden layers forming the laminated wooden board Am is the same as in the first embodiment, and the detailed description thereof is omitted here. The same reference characters are used to represent the same components as in the first embodiment, and the description thereof will be omitted.

The laminated wooden board Am has a density ranging from 500 kg/m³ to 800 kg/m³ and a thickness ranging from 3 mm to 12 mm, for example. A laminated wooden board Am with a small thicknesses ranging from 3 mm to 6 mm are used as, for example, an inner wall material for a cargo bed of a vehicle, such as a truck, a base material for an indoor cushioned floor, a decorative surface material, and an interior material, such as an interior building material (e.g., a riser). A laminated wooden board Am with a medium thickness ranging from 6 mm to 12 mm is used as the base material of an indoor soundproof floor or a floor for walking with shoes on, or an entrance finishing material, for example. In this manner, the laminated wooden board Am is used as a substitute for the existing plywood for a base plate. With the same level of surface properties as an MDF, the laminated wooden board Am is used advantageously as a decorative thin plywood.

The laminated wooden board Am includes a first wooden layer B and two wooden layers (hereinafter also referred to as the "second wooden layers") C and C. The laminated wooden board Am is obtained by laminating and integrating the second wooden layers C and C on both the surfaces of the first wooden layer B. In other words, the first wooden layer B is interposed between the two second wooden layers C and C. That is, the first wooden layer B serves as the core layer of the laminated wooden board Am, while the two second wooden layers C and C serve as the top and bottom layers of the laminated wooden board Am.

The second wooden layers C have each a thickness preferably accounting for 5% to 40%, more preferably accounting for 8% to 30%, and still more preferably accounting for 10% to 25% of the total thickness of the laminated wooden board Am. That is, the thickness ratio of the second, first, and second wooden layers C, B, and C to the laminated wooden board Am preferably ranges from 5:90:5 to 40:20:40, more preferably ranges from 8:84:8 to 30:40:30, and still more preferably ranges from 10:80:10 to 25:50:25. With the ratio of the thicknesses of the first and second wooden layers B and C varied as appropriate, the wooden laminated board Am is obtained which exhibits both the strength required depending on the purpose and the excellent surface properties.

### (First Wooden Layer)

As described above, the first wooden layer B is the wooden board As according to the first embodiment. That is, the configuration of the wooden board As described above is all applied to the first wooden layer B.

### (Second Wooden Layer)

As shown in an enlarged view of FIG. 8, each second wooden layer C is obtained by laminating, adhering, and integrating, in an aggregated state, a large number of tiny thin wood pieces 2, 2, ... with top and bottom surfaces extending along the fibers. The large number of tiny thin wood pieces 2, 2, ... have one type of thickness.

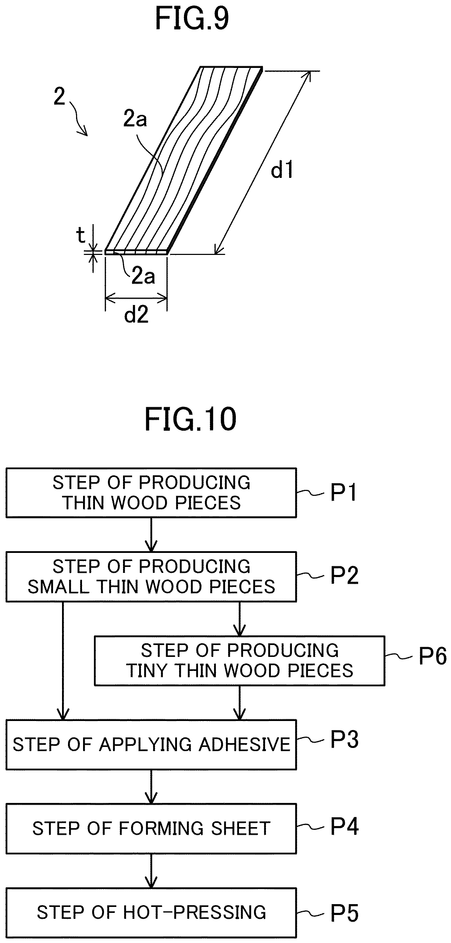

The tiny thin wood pieces 2 are thin pieces smaller in size (i.e., area of the top and bottom surfaces) than the small thin wood pieces 1. The tiny thin wood pieces 2 will be described in detail. As shown in an enlarged view of FIG. 9, the tiny thin wood pieces 2 have a thickness t preferably ranging from 0.05 mm to 0.35 mm, more preferably ranging from 0.10 mm to 0.30 mm, still more preferably from 0.15 mm to 0.25 mm, and further more preferably ranging from 0.15 mm to 0.20 mm. That is, the thickness t of the tiny thin wood pieces 2 is equivalent to (within the same thickness range as) the thickness t of the small thin wood pieces 1. Accordingly, these tiny thin wood pieces 2, 2, ... with the small thickness t determine the characteristics of the second wooden layers C, that is, the characteristics of the laminated wooden board Am. The thickness t of the tiny thin wood pieces 2 is expressed in mean.

The tiny thin wood pieces 2 have an aspect ratio (d1/d2), which is defined like for the small thin wood pieces 1, ranging from 1 to 500 in one preferred embodiment. That is, the tiny thin wood pieces 2 may be in a square shape or an elongated shape (i.e., a strip shape). The tiny thin wood pieces 2 in an elongated shape has a first length d1 which is the longitudinal size (i.e., length) like in the small thin wood pieces 1. The tiny thin wood pieces 2 include fibers 2a, 2a, ... such as vessels or tracheids, for example, and the first length d1 is the length along the fibers 2a. The second length d2 is the transverse size (i.e., width), for example, the size in the direction orthogonal to the fibers. The aspect ratio preferably ranges from 2 to 100, more preferably ranges from 3 to 12.5, and still more preferably ranges from 5 to 10.

The area of the top and bottom surfaces of the tiny thin wood pieces 2 is not particularly limited as long as being smaller than that of the small thin wood pieces 1. The area is preferably 5 cm² or less, more preferably 2 cm² or less, still more preferably 1 cm² or less, and further more preferably 0.5 cm² or less.

The tiny thin wood pieces 2 have a bulk density preferably ranging from 10 kg/m³ to 150 kg/m³, more preferably ranging from 10 kg/m³ to 100 kg/m³, still more preferably ranging from 20 kg/m³ to 95 kg/m³, and further more preferably ranging from 30 kg/m³ to 90 kg/m³.

The tree species used for the tiny thin wood pieces 2, 2, ... is not particularly limited. The tree species which is the same or different from that of the small thin wood pieces 1, 1, ... may be employed. That is, the tree species of the tiny thin wood pieces 2, 2, ... may be the same as or different from that of the small thin wood pieces 1, 1, .... In order to easily produce the tiny thin wood pieces 2, 2, ... using the small thin wood pieces 1, 1, ... , the tree species of the tiny thin wood pieces 2, 2, ... is the same as that of the small thin wood pieces 1, 1, . . . . in one preferred embodiment.

As the physical properties, the density of the tiny thin wood pieces 2 is preferably 250 kg/m³ or more, and more preferably 300 kg/m³ or more. Further, the density is preferably 800 kg/m³ or less, more preferably 500 kg/m³ or less, and still more preferably 400 kg/m³ or less. A density less than 250 kg/m³ requires a thicker sheet to form the laminated wooden board Am with the same levels of density and strength and a higher pressure for hot-pressing in the press forming step.

The tiny thin wood pieces 2 may have a density exceeding 800 kg/m³, which are however not easily available. That is, the upper limit of the density is not necessarily 800 kg/m³ and may be higher, if tiny thin wood pieces 2 with a density exceeding 800 kg/m³ are easily available.

The tiny thin wood pieces 2 have a water content preferably ranging from about 2% to about 20%, and more preferably ranging from 2% to 8%.

In each wooden layer C, (the length of) the fibers 2a, 2a, ... of the large number of tiny thin wood pieces 2, 2, ... may be oriented in a reference direction but not necessarily have such an orientation but may lie randomly. Some of the tiny thin wood pieces 2, 2, ... may include fibers inclined at a certain angle (e.g., about 20°) from the reference direction.

### <Method of Producing Wooden Board (Laminated Wooden Board)>

Next, methods of producing the small thin wood pieces 1, 1, ... and tiny thin wood pieces 2, 2, ... and producing the laminated wooden board Am from these thin wood pieces 1 and 2 will be described with reference to FIG. 10. The method of producing small thin wood pieces 1, 1, ... includes a step P1 of producing thin wood pieces and a step P2 of producing small thin wood pieces. The method of producing the tiny thin wood pieces 2, 2, ... further includes a subsequent step P6 of producing tiny thin wood pieces. The method of producing the laminated wooden board Am further includes subsequent steps, namely, a step P3 of applying an adhesive, a step P4 of forming a sheet, and a step P5 of hot-pressing.

### (Step P1 of Producing Thin Wood Pieces)

The step P1 of producing thin wood pieces is the same as in the first embodiment, and detailed description thereof will thus be omitted here. In the subsequent steps, the thickness t of the small thin wood pieces 1 and the tiny thin wood pieces 2 does not change basically from the thickness of the cut thin wood pieces. The thickness of the cut thin wood pieces remains as the thickness t of the small thin wood pieces 1 and the tiny thin wood pieces 2.

### (Step P2 of Producing Small Thin Wood Pieces)

The step P2 of producing small thin wood pieces is the same as in the first embodiment, and detailed description thereof will thus be omitted here.

### (Step P6 of Producing Tiny Thin Wood Pieces)

In the step P2 of producing small thin wood pieces, the small thin wood pieces 1, 1, . . . are formed and small thin wood pieces 3, 3, ... (not shown) are removed in the classification step of the small thin wood pieces 1, 1, .... From these small thin wood pieces, tiny thin wood pieces 2, 2, ... smaller than the small thin wood pieces 1, 1, ... can be obtained. Note that the "small thin wood pieces 3, 3, ... removed in the classification step" are the small thin wood pieces other than the small thin wood pieces 1 formed in the step P2 of producing small thin wood pieces. The small thin wood pieces 3, 3, ... are in a size (at least one of the thickness t or the aspect ratio, or at least one of the thickness t, the first length d1, or the second length (i.e., width) d2) out of the range.

Specifically, the small thin wood pieces 1, 1, ... and/or the small thin wood pieces 3, 3, ... are further crushed by the same method as in the step P2 of producing small thin wood pieces. Accordingly, the small thin wood pieces 1, 1, ... and/or 3, 3, ... are crushed along the width so as to be split along the fibers (i.e., along the first length) into the tiny thin wood pieces 2, 2, ... which are more elongated than the elongated small thin wood pieces 1, 1, .... That is, the tiny thin wood pieces 2 are thin pieces smaller in the second length (i.e., the width) d2 than the small thin wood pieces 1. In the additional crushing step in the production step P6, the small thin wood pieces 1, 1, ... and/or 3, 3, ... are also crushed along the first length. That is, the tiny thin wood pieces 2 are thin pieces smaller not only in the second length (i.e., the width) d2 but also in the first length d1 than the small thin wood pieces 1.

As an alternative, the small thin wood pieces 3, 3, ... may be sorted using a mesh of Φ2, for example, and those passing through the mesh may serve as the tiny thin wood pieces 2, 2....

In this manner, the small thin wood pieces 1, 1, ... formed and the small thin wood pieces 3, 3, ... removed in the step P2 of producing small thin wood pieces are used and further subjected to the step of crushing or classification. Accordingly, the tiny thin wood pieces 2, 2, ... can be easily produced which are smaller in the first length d1 and/or the second length d2 than the small thin wood pieces 1, 1, . . . .

The process may include causing the tiny thin wood pieces 2, 2, ... obtained in the additional crushing step to pass through a sieve (e.g., with a mesh of Φ2) or any other suitable tool and sorting (classifying) the size of the tiny thin wood pieces 2, 2, .... Accordingly, the large number of tiny thin wood pieces 2, 2, ... become fine and uniform in size and shape. From the foregoing, the tiny thin wood pieces 2, 2, ... are produced.

### (Step P3 of Applying Adhesive)

The large number of small thin wood pieces 1, 1, ... and tiny thin wood pieces 2, 2, ... , which are fine and uniform in size and shape, are obtained by the sorting in the step P2 of producing small thin wood pieces and the step P6 of producing tiny thin wood pieces. The step P3 of applying an adhesive is then performed. These small thin wood pieces 1, 1, ... and tiny thin wood pieces 2, 2, ... are transferred into adhesive application equipment and applied with an adhesive. The adhesive may be an isocyanate-based adhesive, for example. Besides, for example, a phenolic resin, an amine-based adhesive, such as a urea resin or a melamine resin, or a natural product-based adhesive may be used. In combination with the adhesive, a generally used water repellent may be used.

### (Step P4 of Forming Sheet)

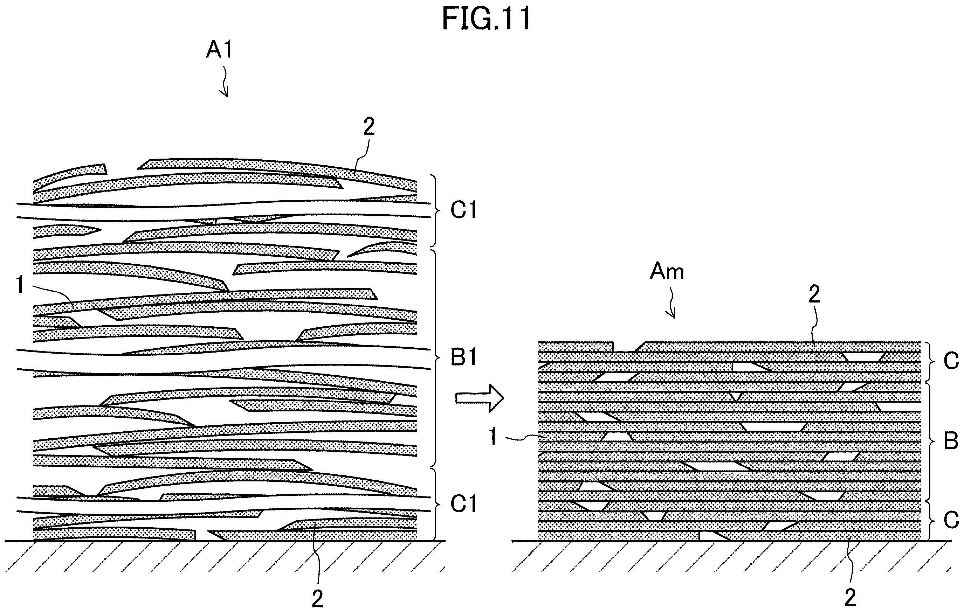

Next, as shown on the left of FIG. 11, first, the large number of tiny thin wood pieces 2, 2, ... applied with the adhesive are laminated (stacked) to a predetermined thickness (i.e., height) in an aggregated state along the thickness with or without being oriented along the fibers to form a sheet C1 (i.e., a second aggregate) made only of the tiny thin wood pieces 2, 2, . . . . Next, the large number of small thin wood pieces 1, 1, ... applied with the adhesive are laminated to a predetermined height in an aggregated state along the thickness with or without being oriented along the fibers to form a sheet B1 (i.e., a first aggregate) made only of the small thin wood pieces 1, 1, .... Finally, the sheet C1 made only of the tiny thin wood pieces 2, 2, . . . is formed on the resultant sheet B as described above. In this manner, the sheets C1, B1, and C1 are sequentially laminated into a laminated sheet A1 with the triple-layer structure.

At this time, the thicknesses of the sheets B1 and C1 are adjusted to obtain desired thickness ratios of the first and second wooden layers B and C to the total thickness of the laminated wooden board Am. For example, assume that a laminated board Am is formed which has a thickness of 4 mm and includes second wooden layers C each having a thickness accounting for 15% of the total thickness of the laminated wooden board Am (i.e., the thickness ratio of the second, first, and second wooden layers C, B, and C, are 15:70:15). In this case, first, tiny thin wood pieces 2, 2, ... with a thickness t of 0.2 mm are stacked so that the resultant sheet C1 has a thickness (i.e., height) of about 5 mm. Then, small thin wood pieces 1, 1, ... with a thickness t of 0.2 mm are stacked on the sheet C1 so that the resultant sheet B1 has a thickness of about 24 mm. Finally, tiny thin wood pieces 2, 2, ... are stacked on the sheet B1 so that the resultant sheet C1 has a thickness of about 5 mm. Accordingly, the laminated sheet A1 with the triple-layer structure of the sheets B1, C1 and A1 has a thickness (i.e., height) of about 34 mm.

### (Step P5 of Hot-Pressing)

This laminated sheet A1 is first pressed and slightly compacted as in the case of a typical wooden board and then transferred into a hot press machine and set between hot plates. The hot press machine performs hot-pressing on the laminated sheet A1 at predetermined pressure and temperature to compress and integrally form the laminated sheet A1 by curing the adhesive. Accordingly, the laminated wooden board Am shown in FIG. 7 is formed.

At this time, as shown in FIG. 11, the illustrated sheet A1 with a thickness of about 40 mm is compressed into the laminated wooden board Am with a thickness of 4 mm, for example, that is, a one-tenth thickness. The pressing temperature for the hot-pressing is not particularly limited but may range from 100°C to 180°C, for example. The pressing pressure in the hot-pressing ranges from 2 N/mm² to 4 N/mm², for example. The pressing period is one to two minutes, for example. The pressing period depends on the thickness of the laminated wooden board Am and may be shorter than one minute or longer than two minutes. A preheating using a heating machine may be performed before the hot-pressing using the hot press machine.

The small thin wood pieces 1, 1, ... and the tiny thin wood pieces 2, 2, ... in a smaller size have their knots removed and are kept in a fine size without variation and the resultant sheets B1 and C1 are thus homogeneous. That is, the whole laminated sheet A1 is thus homogeneous, which causes less variation in the strength of the laminated wooden board Am. That is, a strand board made of large strands (i.e., flakes) has, due to a non-uniform sheet including knots, for example, thin, low-strength portions (or spots), causing variation in the strength. The laminated wooden board Am is however free from the problem. In addition, the sheet B1 made of thinner small thin wood pieces 1, 1, ... has a higher homogeneity, and the resultant laminated wooden board Am thus tends to exhibit a higher strength. In general, a strand board made of large strands (i.e., flakes) can exhibit a higher strength. In the present invention, the laminated wooden board Am has both homogeneity and strength with the small thin wood pieces 1 obtained by further miniaturizing the thin wood pieces (i.e., cut thin wood pieces), which are thinner and smaller than the flakes, by crushing.

The small thin wood pieces 1, 1, ... are small and uniform in size with gaps left evenly in the sheet B1. Similarly, the tiny thin wood pieces 2, 2, ... are smaller and more uniform in size than the small thin wood pieces 1, 1, ... with gaps left evenly in the sheet C1. Even if the small thin wood pieces 1, 1, ... in the sheet B1 and the tiny thin wood pieces 2, 2, ... in the sheet C1 are hot-pressed, while containing a relatively large amount of moisture, vapor generated by evaporation of the moisture is smoothly released from the sheets B1 and C1. That is, as shown on the left of FIG. 11, the sheet B1 includes a large number of small voids between the adjacent small thin wood pieces 1, 1, .... Similarly, the sheet C1 also includes a large number of small voids between the adjacent tiny thin wood pieces 2, 2, .... These voids communicate with each other not only along the fibers and orthogonally to the fibers of the small thin wood pieces 1, 1, ... and tiny thin wood pieces 2, 2, ... but also along the thickness. In addition, these voids are continuous not only in the sheets B1 and in the sheets C1 but also between the sheets B1 and C1, and are continuous three-dimensionally throughout the laminated sheet A1. This configuration causes less puncture at the stop of applying pressure onto the laminated wooden board Am.

Through these steps, the laminated wooden board Am is formed which includes the first and second wooden layers B and C with (i.e., which has, as a whole,) a density ranging from 500 kg/m³ to 800 kg/m³ and a Young's modulus of bending ranging from 3.5 GPa to 5.0 GPa.

The densities of the first wooden layers B and C may be substantially the same or different. The densities of the wooden layers B and C are different from each other in one preferred embodiment to reduce the puncture during the formation. If the densities of the first and second wooden layers B and C are different, the difference is 400 kg/m³ or more, for example. The magnitude relationship between the densities of the first and second wooden layers B and C is not particularly limited. The density of the first wooden layer B may be higher or lower than that of the second wooden layers C. In order to improve the smoothness, color tone, and color uniformity as the surface properties of the laminated wooden board Am, the second wooden layers C is a high-density wooden layer with a higher density than the first wooden layer B in one preferred embodiment.

As shown on the right of FIG. 11, this wooden board As includes (retains) a large number of three-dimensionally continuous small voids inside the first and second wooden layers B and C. Accordingly, the laminated wooden board Am also has an excellent air permeability.

### (Other Steps)

The method of producing the laminated wooden board Am may further include, as another step, a finish step after the step P5 of hot-pressing. In the finish step, the laminated wooden board Am is cured to an equilibrium water content and then the second wooden layers C as the top and bottom surfaces are ground by a sander to adjust the final thicknesses of the laminated wooden board Am. The sander may be a generally used one and is #150, for example. Through this finish step, the laminated wooden board Am with more excellent surface properties can be obtained.

The laminated wooden board Am according to this embodiment can provide the following advantages.

The laminated wooden board Am includes two types of the small thin wood pieces 1 and tiny thin wood pieces 2 with thicknesses within the same range and in different sizes. Specifically, the laminated wooden board Am includes: the first wooden layer B and the two second wooden layers C. The first wooden layer B is a single layer obtained by laminating, adhering, and integrating a large number of small thin wood pieces 1, 1, ... in an aggregated state. The second wooden layers C are each a single layer obtained by laminating, adhering, and integrating a large number of tiny thin wood pieces 2, 2, ... with a smaller area than the small thin wood pieces 1, 1, ... in an aggregated state. The laminated wooden board Am is a triple layer obtained by laminating and integrating the second wooden layers C and C on both the surfaces of the first wooden layer B.

That is, the first wooden layer B serving as the core layer of the laminated wooden board Am has the same configuration as the wooden board As. Accordingly, the first wooden layer B (i.e., the laminated wooden board Am) not only has a higher strength but is less warped by moisture absorption and desorption, and thus exhibit dimensional stability as excellent as tropical plywood. In addition, the large number of tiny thin wood pieces 2, 2, ... which are smaller in the area (specifically, at least one of the first length d1 or the second length (i.e., the width) d2) than the first small thin wood pieces 1, 1, ... are more uniform in size. Thus, the second wooden layers C and C serving as the top and bottom surfaces of the laminated wooden board Am have no significant unevenness on the surfaces unlike typical OSBs and thus exhibit more excellent surface properties that are as excellent as MDFs. The sheets B1 and C1, which are the aggregates of the large number of small thin wood pieces 1, 1, ... and the tiny thin wood pieces 2, 2, ... , respectively, and uniform in size are sequentially laminated and integrated in the order of the sheets C1, B1, and C1. Accordingly, the laminated wooden board Am is thus produced easily.

In particular, made of the first small thin wood pieces 1, 1, ... with a mean thickness t ranging from 0.15 mm to 0.25 mm and in an elongated shape with an aspect ratio (d1/d2) ranging from 4 to 40, the first wooden layer B serving as the core layer of the laminated wooden board Am has improved dimensional stability. As a result, the dimensional stability of the laminated wooden board Am improves. Since the smoothness of the surfaces of the first wooden layer B improves, the smoothness, color tone, and color uniformity of the surfaces of the second wooden layers C and C laminated on the first wooden layer B also improve. As a result, the laminated wooden board Am with more excellent surface properties can be obtained.

Assume that the second wooden layers C serving as the top and bottom layers of the laminated wooden board Am are made of the tiny thin wood pieces 2, 2, ... with a mean thickness ranging from 0.15 mm to 0.25 mm and in an elongated shape with an aspect ratio (d1/d2) ranging from 5 to 10. The second wooden layers C then exhibit, that is, the resultant laminated wooden board Am exhibits further improved surface properties.

In particular, assume that the first wooden layer B serving as the core layer of the laminated wooden board Am is made of second small thin wood pieces 1, 1, ... with a mean thickness t ranging from 0.05 mm to 0.35 mm and a bulk density ranging from 20 kg/m³ to 90 kg/m³. The first wooden layer B then exhibits improved dimensional stability. As a result, the dimensional stability of the laminated wooden board Am improves. Since the smoothness of the surfaces of the first wooden layer B improves, the smoothness, color tone, and color uniformity of the surfaces of the second wooden layers C and C laminated on the first wooden layer B also improve. As a result, the laminated wooden board Am with more excellent surface properties can be obtained.

Assume that the second wooden layers C serving as the top and bottom layers of the laminated wooden board Am are made of tiny thin wood pieces 2, 2, ... with a mean thickness t ranging from 0.05 mm to 0.35 mm and a bulk density ranging from 10 kg/m³ to 150 kg/m³. The second wooden layers C then exhibit, that is, the resultant laminated wooden board Am exhibits further improved surface properties.

Made of the second wooden layers C with a thickness preferably accounting for 5% to 40% of the total thickness of the laminated wooden board Am, the laminated wooden board Am can exhibit both a high strength and excellent surface properties.

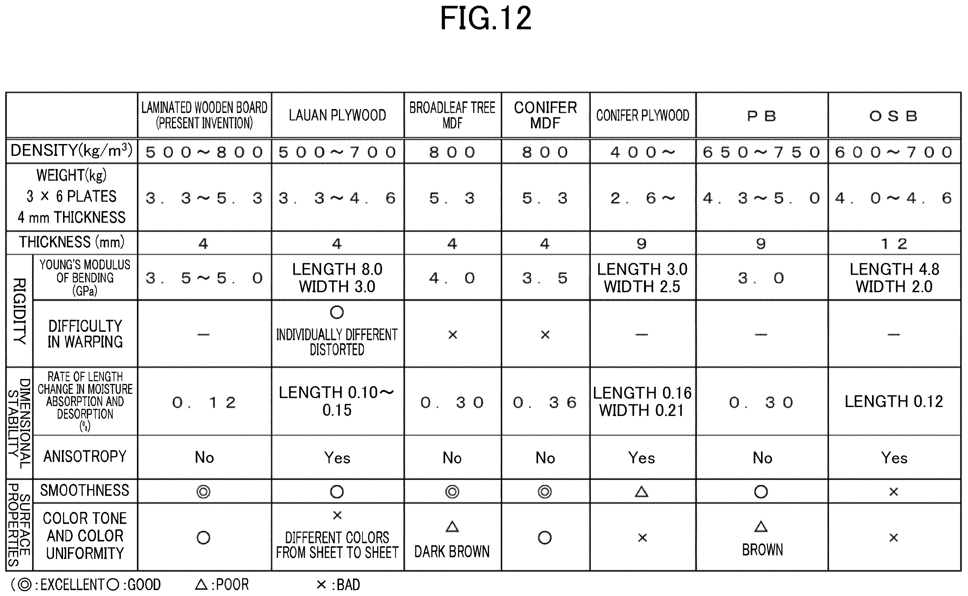

FIG. 12 illustrates the characteristics of the laminated wooden board Am according to the present invention in comparison with boards made of other materials. The laminated wooden board Am is as large as lauan plywood in the Young's modulus of bending, the rate of change in the length at the time of moisture absorption and desorption. The laminated wooden board Am is superior to lauan plywood in the anisotropy as the dimensional stability; and the smoothness, the color tone and the color uniformity as the surface properties. As compared to an OSB, the laminated wooden board Am has a uniform Young's modulus of bending in the longitudinal and transverse directions, and is excellent in the anisotropy as the dimensional stability; and the smoothness, the color tone, and the color uniformity as the surface properties. That is, the laminated wooden board Am has a high strength and excellent dimensional stability and surface properties. It can be said that the laminated wooden board Am is a wooden board not only has the characteristics described above but also is specialized in the surface properties, as compared to a single-layer wooden board (in other words, the first wooden layer B) made only of the small thin wood pieces 1, 1, . . . .

### <Other Embodiments>

In the embodiments described above, the wooden board As (i.e., the first wooden layer (core layer) B in the second embodiment) is made of the small thin wood pieces 1 obtained by crushing thin wood pieces (i.e., cut thin wood pieces) as cut from raw timber into smaller sizes. Alternatively, the wooden board As may be made of thin wood pieces (i.e., cut thin wood pieces) as cut from raw timber.

In the embodiment described above, the step P1 of producing thin wood pieces and the step P2 of producing small thin wood pieces each includes the classification step. Alternatively, in the present invention, only one of the steps P1 and P2 may include the classification step, or none of the steps P1 and P2 may include the classification step. In order not only to increase the strength and but also to further improve the dimensional stability and the surface properties of the wooden board As, the step P1 or P2 includes the classification step in one preferred embodiment, the step P2 includes the classification step in one more preferred embodiment, and both the steps P1 and P2 include the classification step in one further more preferred embodiment.

### [Examples]

Now, the present disclosure will be described based on examples. Note that the present disclosure is not limited to the following examples. Modifications and change may be made to the following examples based on the spirit of the present disclosure and should not be excluded from the scope of the present disclosure.

### (Example 1)

The bulk densities of the small thin wood pieces (i.e., the second small thin wood pieces) produced in the step of producing small thin wood pieces described above were measured. Specifically, the small thin wood pieces were piled up without gaps in a measurement container with a volume of 10 L. The tops of the piled small thin wood pieces were cut by rubbing and flattened to be flush with each other using a spatula or any other suitable tool without applying any pressure. In this state, the mass was measured. The bulk densities were obtained from the equation (1), where the "mass of small thin wood pieces" was the value obtained by subtracting the mass of the measurement container from the mass and the "volume of small thin wood pieces" was the volume (0.01 m³) of the measurement container. Several types of small thin wood pieces were prepared in different sizes, each had a mean thickness ranging from 0.05 mm to 0.5 mm and included top and bottom surfaces with an area of 64 cm² or less (0.5 cm² or more). The bulk density of the small thin wood pieces in each size was then measured. As a result, it was found that the small thin wood pieces each had a bulk density ranging from 10 kg/m³ to 100 kg/m³ (i.e., 10 kg/m³ to 150 kg/m³). It was found that the small thin wood pieces with a mean thickness ranging from 0.05 mm to 0.35 mm have a bulk density ranging from 20 kg/m³ to 90 kg/m³.

### (Comparative Example 1)

Like in Example 1, the bulk densities of flakes (corresponding to strands usually used as a constituent material of an OSB) were measured, which were used as a raw material in the step of producing thin wood pieces. Several types of flakes were prepared in different sizes, each had a mean thickness ranging from 0.06 mm to 1.5 mm and included top and bottom surfaces with an area of 36 cm² or less. The bulk density of the flakes in each size was then measured. As a result, it was found that the flakes had each a bulk density of 200 kg/m³ or more.

### (Example 2)

Like in Example 1, the bulk densities of the tiny thin wood pieces produced in the step of producing tiny thin wood pieces described above were measured. Several types of tiny thin wood pieces were prepared in different sizes, each had a mean thickness ranging from 0.05 mm to 0.5 mm and included top and bottom surfaces with an area smaller (e.g., 5 cm² or less) than the small thin wood pieces used in Example 1. The bulk density of the tiny thin wood pieces in each size was then measured. As a result, it was found that the tiny thin wood pieces had each a bulk density ranging from 10 kg/m³ to 100 kg/m³ (i.e., 10 kg/m³ to 150 kg/m³).

### INDUSTRIAL APPLICABILITY

The present invention allows easy production of a wooden board, which is made of small thin wood pieces uniform in size and has a higher strength and dimensional stability and surface properties as excellent as tropical plywood, and is thus significantly useful and highly industrially applicable.

### DESCRIPTION OF REFERENCE CHARACTERS

- As: Wooden Board
- Am: Laminated Wooden Board (Wooden Board)
- A1: Sheet
- B: First Wooden Layer
- B1: Sheet
- C: Second Wooden Layer
- C1: Sheet
- P1: Step of Producing Thin Wood Pieces
- P2: Step of Producing Small Thin Wood Pieces
- P3: Step of Applying Adhesive
- P4: Step of Forming Sheet
- P5: Step of Hot-Pressing
- P6: Step of Producing Tiny Thin Wood Pieces
- 1: Small Thin Wood Piece
- 1a: Fiber
- 2: Tiny Thin Wood Piece
- 2a: Fiber
- t: Thickness
- d1: First Length
- d2: Second Length
- d1/d2: Aspect Ratio

## Claims

1. A wooden board obtained by laminating, adhering, and integrating, in an aggregated state, a large number of small thin wood pieces with top and bottom surfaces extending along fibers,
the small thin wood pieces each having a thickness ranging from 0.05 mm to 0.35 mm between the top and bottom surfaces, and an aspect ratio ranging from 4 to 80 where the aspect ratio is defined by (a first length along the fibers)/(a second length in a direction orthogonal to the fibers).

2. A wooden board obtained by laminating, adhering, and integrating, in an aggregated state, a large number of small thin wood pieces with top and bottom surfaces extending along fibers,
the small thin wood pieces each including the top and bottom surfaces with an area of 6 cm² or less and having a thickness ranging from 0.05 mm to 0.35 mm between the top and bottom surfaces.

3. A wooden board obtained by laminating, adhering, and integrating, in an aggregated state, a large number of small thin wood pieces with top and bottom surfaces extending along fibers,
the small thin wood pieces each including the top and bottom surfaces with an area of 6 cm² or less and having an aspect ratio ranging from 4 to 80 where the aspect ratio is defined by (a first length along the fibers)/(a second length in a direction orthogonal to the fibers).

4. A wooden board obtained by laminating, adhering, and integrating, in an aggregated state, a large number of small thin wood pieces with top and bottom surfaces extending along fibers,
the small thin wood pieces each including the top and bottom surfaces with an area of 6 cm² or less, having a thickness ranging from 0.05 mm to 0.35 mm between the top and bottom surfaces, and having an aspect ratio ranging from 4 to 80 where the aspect ratio is defined by (a first length along the fibers)/(a second length in a direction orthogonal to the fibers).

5. A wooden board obtained by laminating, adhering, and integrating, in an aggregated state, a large number of small thin wood pieces with top and bottom surfaces extending along fibers,
the small thin wood pieces each having a bulk density ranging from 10 kg/m³ to 150 kg/m³, and including the top and bottom surfaces with an area of 6 cm² or less.

6. The wooden board of any one of claims 1 to 5, wherein
a wooden layer is laminated and integrated on each of the top and bottom surfaces of the wooden board, and
the wooden board is obtained by laminating, adhering, and integrating tiny thin wood pieces with a smaller area than the small thin wood pieces in an aggregated state.

7. The wooden board of claim 6, wherein
the wooden layer has a thickness accounting for 5% to 40% of a total thickness of the wooden board.

8. The wooden board of any one of claims 1 to 7, wherein
the wooden board has a density ranging from 500 kg/m³ to 800 kg/m³.

9. The wooden board of any one of claims 1 to 8, wherein
the wooden board has a root mean square height Sq ranging from 0.005 µm to 0.015 µm on a surface, or an arithmetic mean height Sa ranging from 0.002 µm to 0.007 µm on the surface.
